(19) Europäisches Patentamt
European Patent Office
Office européen des brevets

(11) **EP 2 572 463 B1**

(12) **EUROPÄISCHE PATENTSCHRIFT**

(45) Veröffentlichungstag und Bekanntmachung des Hinweises auf die Patenterteilung:
**18.04.2018 Patentblatt 2018/16**

(21) Anmeldenummer: **11720087.3**

(22) Anmeldetag: **16.05.2011**

(51) Int Cl.:
*H04J 3/06* (2006.01)     *H04N 7/24* (2011.01)
*H04L 12/40* (2006.01)     *B60R 16/02* (2006.01)

(86) Internationale Anmeldenummer:
**PCT/EP2011/057825**

(87) Internationale Veröffentlichungsnummer:
**WO 2011/144548 (24.11.2011 Gazette 2011/47)**

(54) **VERFAHREN UND VORRICHTUNG ZUR SYNCHRONISIERUNG VON DATEN IN EINEM FAHRZEUG**

METHOD AND DEVICE FOR SYNCHRONIZING DATA IN A VEHICLE

PROCÉDÉ ET DISPOSITIF DE SYNCHRONISATION DE DONNÉES DANS UN& xA; VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2010 DE 102010029030**

(43) Veröffentlichungstag der Anmeldung:
**27.03.2013 Patentblatt 2013/13**

(73) Patentinhaber: **Bayerische Motoren Werke Aktiengesellschaft**
**80809 München (DE)**

(72) Erfinder:
• **SCHRAMM, Andreas**
**94110 Wegscheid (DE)**
• **KICHERER, Max**
**80798 München (DE)**

(56) Entgegenhaltungen:
**EP-A1- 1 643 775     EP-A2- 0 855 311**
**WO-A2-2004/043032**

• **ISHIBASHI Y ET AL: "A group synchronization mechanism for stored media in multicast communications", INFOCOM '97. SIXTEENTH ANNUAL JOINT CONFERENCE OF THE IEEE COMPUTER AN D COMMUNICATIONS SOCIETIES. DRIVING THE INFORMATION REVOLUTION., PROCE EDINGS IEEE KOBE, JAPAN 7-11 APRIL 1997, LOS ALAMITOS, CA, USA,IEEE COMPUT. SOC, US, Bd. 2, 7. April 1997 (1997-04-07), Seiten 692-700, XP010252076, DOI: 10.1109/INFCOM.1997.644522 ISBN: 978-0-8186-7780-9**
• **H. Schöpp: "Video Transmission in Second Generation MOST Systems", http://www.mostcooperation.com , 18. November 2007 (2007-11-18), Seiten 1-23, XP000002656534, Gefunden im Internet: URL:http://www.mostcooperation.com/news_an d_events/events_archive/articles/interconn ectivity_conference_japan/index.html?do=do wnload&id=170170 [gefunden am 2011-08-09]**

**Beschreibung**

Die Erfindung betrifft ein Verfahren und eine Vorrichtung zur Verarbeitung von Daten in einem Fahrzeug.

Es ist eine Audio Video Bridging (AVB) Technologie bekannt, die den Transport von zeitsynchronen Audio- und Videodaten mit geringer Verzögerung unter Ausnutzung einer Dienstgüte (Quality of Service, QoS) über eine Ethernet-Verbindung ermöglicht. Ein audiovisueller Datenstrom (A/V-Strom) ist gemäß AVB durch eine Kennung (StreamID) identifizierbar. Diese Kennung umfasst eine MAC-Adresse einer AVB-Quelle.

Weiterhin ist ein Transportprotokoll gemäß IEEE 1722 bekannt ("AVB Transport Protocol"). Ein Ethernet-Rahmen umfasst hierbei einen IEEE P1722 Datenstrom, wobei ein Paket des Datenstroms eine Präsentationszeit (auch bezeichnet als AVB TP Zeitstempel oder AVB TP Time Stamp) umfasst. Mittels der AVB-Technologie kann bereits auf Schicht-2 durch Analyse des sogenannten Ether-Typs festgestellt werden, ob es sich bei dem IEEE 1722 Paket um A/V-Daten oder um andere Informationen (z.B. sonstige IP-Daten) handelt. Daher muss das IEEE 1722 Paket nicht erst aufwändig über mehrere Schichten eines Protokoll-Stapels analysiert werden, bevor der Typ des Dateninhalts bestimmt werden kann. Die erwähnte Präsentationszeit wird von der AVB-Quelle bestimmt. Das IEEE 1722 Paket umfasst Nutzdaten (Payload), z.B. in Form eines IEC 61883 Pakets. Entsprechend können andere A/V-Formate genutzt werden.

Auch ist gemäß IEEE 802.1AS bzw. PTP (Precision Time Protocol) ein Protokoll zur Zeitsynchronisation bzw. Uhrensynchronisation verschiedener Komponenten eines Netzwerks bekannt.

Fahrzeuge verfügen zunehmend über Monitore (auch bezeichnet als Anzeigeeinheiten oder Displays), die es den Passagieren (dem Beifahrer, insbesondere bei stehendem Fahrzeug auch dem Fahrer und/oder Passagieren im Fond des Fahrzeugs) ermöglichen, audiovisuelle Inhalte, z.B. Filme oder Fernsehsendungen, zu betrachten. Hierzu sind oftmals mehrere Monitore in dem Fahrzeug angeordnet, z.B. ein oder zwei Monitore im Fond und ein oder zwei Monitore für den Fahrer sowie den Beifahrer.

Betrachten alle Passagiere denselben audiovisuellen Inhalt, kann eine Ausgabe der Audioinhalte über ein Hauptschallfeld des Fahrzeugs, umfassend z.B. mindestens einen Verstärker mit angebundenen Lautsprechern, erfolgen. Hierbei ist es wichtig, dass die Ausgabe des Tons lippensynchron zu der Ausgabe des Bildes auf allen Monitoren erfolgt. Bereits geringe Abweichungen von einer derartigen lippensynchronen Ausgabe des Tons werden von den Nutzern als störend wahrgenommen.

Hierbei ist es problematisch, dass eine Datenquelle (A/V Quelle) einen komprimierten audiovisuellen Datenstrom bereitstellt, der z.B. über eine vordere Verarbeitungseinheit (z.B. eine sogenannte Headunit) auf mindestens einem vorderen Monitor und über eine hintere Verarbeitungseinheit (z.B. eine Rear-Seat-Entertainment (RSE) Einheit) auf mindestens einem hinteren Monitor des Fahrzeugs ausgegeben wird und dabei der audiovisuelle Datenstrom separat sowohl von der vorderen als auch von der hinteren Verarbeitungseinheit dekodiert wird. Die Übertragung des Datenstroms und die Dekodierung des Datenstroms kann unterschiedlich lange dauern, wodurch die vorne und hinten ausgegebenen Bilddaten auseinanderdriften und Lippensynchronizität der wiedergegebenen Bilder zu dem ausgegebenen Ton nicht gewährleistet ist. Es sei angemerkt, dass wenn eine der Verarbeitungseinheiten zur Ansteuerung des Hauptschallfeldes eingesetzt wird, die andere Verarbeitungseinheit die dekodierten Bilddaten auf dem angeschlossenen Monitor nicht automatisch lippensynchron zu dem über das Hauptschallfeld ausgegebenen Ton wiedergibt.

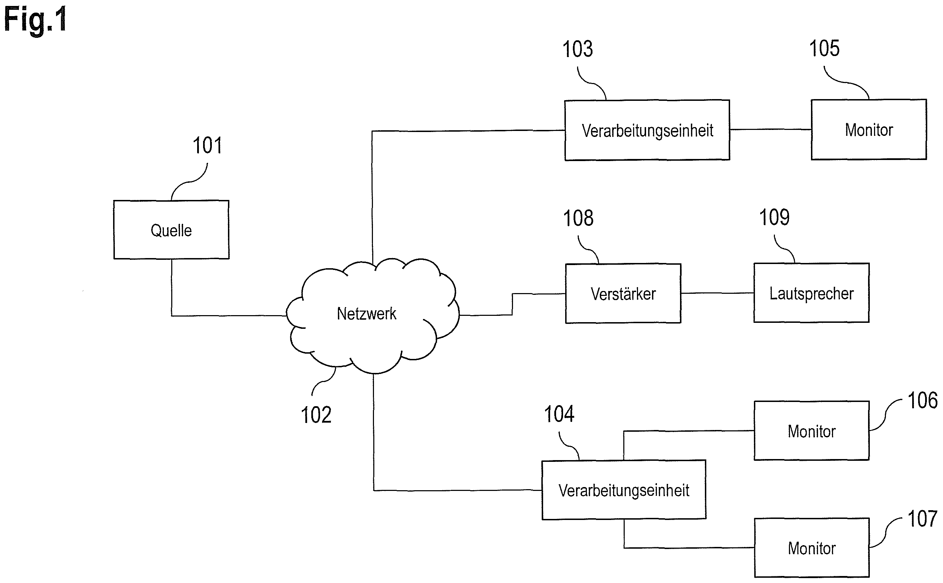

**Fig.1** zeigt eine beispielhafte Anordnung eines Netzwerks in einem Fahrzeug umfassend eine Datenquelle 101, die über ein Netzwerk 102, z.B. ein Ethernet, mit einer ersten Verarbeitungseinheit 103 (z.B. einer Headunit) und mit einer zweiten Verarbeitungseinheit 104 (z.B. einer RSE Einheit) verbunden ist. An die Verarbeitungseinheit 103 ist ein Monitor 105 und an die Verarbeitungseinheit 104 sind zwei Monitore 106, 107 angeschlossen. Weiterhin ist ein Verstärker 108 mit dem Netzwerk 102 verbunden, der (mindestens) einen Lautsprecher 109 speist.

In dem in Fig.1 gezeigten Beispiel leitet die Datenquelle 101 einen komprimierten audiovisuellen Datenstrom über das Netzwerk 102 an die Verarbeitungseinheiten 103, 104, die den Datenstrom dekodieren und die Bilddaten auf den angeschlossenen Monitoren 105, 106, 107 anzeigen. Nur die Verarbeitungseinheit 103 dekodiert die Audioinformation (Toninformation) und übermittelt diese über das Netzwerk 102 an den Verstärker 108. Entsprechend ist eine lippensynchrone Ausgabe der Audioinformation zu den auf den Monitoren 106, 107 dargestellten Videoinformationen nicht gegeben.

Die **Aufgabe** der Erfindung besteht darin, die vorstehend genannten Nachteile zu vermeiden und insbesondere eine Lösung zu schaffen, Audioinformation lippensynchron zu Videoinformationen auszugeben, wobei insbesondere die Videoinformationen von verschiedenen Verarbeitungseinheiten eines Fahrzeugs dekodiert werden können.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Verarbeitung von Daten in einem Fahrzeug vorgeschlagen,

- bei dem die Daten über ein Netzwerk von einer ersten Verarbeitungseinheit empfangen werden;
- bei dem die Daten von der ersten Verarbeitungseinheit dekodiert werden;
- bei dem eine Wiedergabeinformation umfassend eine Ausgabezeit oder eine Synchronisationsinformation an die zweite Verarbeitungseinheit übertragen wird.

Somit wird vorteilhaft die zweite Verarbeitungseinheit von der ersten Verarbeitungseinheit über eine Ausgabezeit informiert und zwar nach der Dekodierung der empfangenen Daten in der ersten Verarbeitungseinheit. Beispielsweise kann so von der ersten Verarbeitungseinheit die Ausgabezeit ermittelt werden, die z.B. Laufzeiten zur Übertragung der Daten in dem Netzwerk und/oder Verarbeitungszeiten in den einzelnen Komponenten des Netzwerks berücksichtigt, und der zweiten Verarbeitungseinheit entsprechend mitteilt. Somit kann erreicht werden, dass eine synchronisierte Ausgabe der Daten an mehreren Verarbeitungseinheiten oder Ausgabeeinheiten des Netzwerks erfolgt, insbesondere kann somit eine lippensynchrone Ausgabe von Audio- und Videoinformationen (z.B. an mehreren Monitoren des Fahrzeugs, die zumindest teilweise von unterschiedlichen Verarbeitungseinheiten angesteuert werden) erfolgen.

Hierbei sei angemerkt, dass entsprechend mehr als zwei Verarbeitungseinheiten vorgesehen sein können, wobei die erste Verarbeitungseinheit dann entsprechend eine weitere Verarbeitungseinheit wie die zweite Verarbeitungseinheit behandeln kann.

Bei den Daten kann es sich beispielsweise um kombinierte Audio- und Videoinformationen handeln, die insbesondere komprimiert übertragen und von der ersten (und ggf. zweiten) Verarbeitungseinheit empfangen werden.

Die Audioinformation kann über mindestens einen Lautsprecher ausgegeben und die Videoinformationen kann über mindestens einen Monitor (Anzeigeeinheit) ausgegeben werden. Insbesondere kann an die erste und/oder zweite Verarbeitungseinheit jeweils mindestens ein Monitor angeschlossen sein, auf dem die Videoinformation der empfangenen und dekodierten Daten ausgegeben wird.

Bei dem Netzwerk kann es sich um eine Verbindungsstruktur handeln, die eine Kommunikation zwischen Komponenten des Netzwerks ermöglicht. Das Netzwerk ist beispielsweise ein paketorientiertes Netzwerk, z.B. ein Ethernet oder ein IP-basiertes Netzwerk. Das Netzwerk kann drahtgebundene oder drahtlose Kommunikationsabschnitte (z.B. Funkverbindungen) umfassen. Beispielsweise kann das Netzwerk ein drahtloses Netzwerk, z.B. ein Wireless LAN (WLAN) oder mindestens eine Bluetooth-Verbindung aufweisen. Auch kann das Netzwerk ein Bussystem umfassen, z.B. ein MOST Netzwerk (auch bezeichnet als MOST Bus oder MOST Bussystem), in dem die angeschlossenen Komponente eine gemeinsame Zeitbasis (z.B. eine sogenannte MOST Systemzeit) kennen und diese entsprechend nutzen können.

Die Verarbeitungseinheit kann ein Steuergerät des Fahrzeugs sein. Beispielsweise kann es sich bei der ersten Verarbeitungseinheit um ein zentrales Steuergerät des Fahrzeugs (z.B. eine sogenannte Headunit) handeln. Die zweite Verarbeitungseinheit kann z.B. ein Steuergerät einer RSE-Einheit sein. Insbesondere kann die Verarbeitungseinheit ein mobiles Gerät sein, das z.B. über eine Funkschnittstelle mit dem Netzwerk verbunden ist. Damit ist es möglich, dass z.B. eine Monitor-Funktionalität eines mobilen Geräts als (zweite) Verarbeitungseinheit eingebunden wird, die Ausgabe der Toninformation kann z.B. über das Hauptschallfeld des Fahrzeugs erfolgen. So kann ein Passagier in dem Fahrzeug die Anzeige seines mobilen Endgeräts nutzen, um die Videoinformation von der Quelle zu betrachten und hört dazu lippensynchron die Audioinformation über die Lautsprecher des Fahrzeugs.

Ferner sei angemerkt, dass es sich bei der Synchronisationsinformation um eine Information handelt, anhand derer eine Synchronisation der zweiten Verarbeitungseinheit (oder eines Teils, z.B. einer Dekodiereinheit) mit der ersten Verarbeitungseinheit (oder eines Teils, z.B. einer Dekodiereinheit) erreicht werden kann. Insbesondere kann damit sichergestellt werden, dass diejenige Verarbeitungseinheit, die die Ausgabe der Toninformation steuert, auch die Synchronisation mit der mindestens einen verbleibenden Verarbeitungseinheit veranlasst bzw. steuert.

Weiterhin ist es eine Option, dass die Ausgabezeit und die Synchronisationsinformation als Wiedergabeinformation an die zweite Verarbeitungseinheit übertragen werden.

Die Wiedergabeinformation umfasst z.B. ein Telegramm, das z.B. mittels eines PTP an die zweite Verarbeitungseinheit übertragen wird.

Insbesondere kann die Verarbeitungseinheit mindestens einen Speicher (auch bezeichnet als Puffer) zum Zwischenspeichern eingehender Daten (z.B. Datenpakete) und/oder zum Zwischenspeichern dekodierter Video- und/oder Audioinformationen aufweisen.

Auch ist es möglich, dass die erste Verarbeitungseinheit einen Sender aufweist zur Übertragung der Wiedergabeinformation und ggf. der dekodierten Daten zu der zweiten (und/oder einer weiteren) Verarbeitungseinheit und/oder zu einer Ausgabeeinheit.

Die Daten können in dem Fahrzeug von einer Quelle bereitgestellt werden. Die Quelle kann z.B. einen Transcoder, einen Empfänger, eine Festplatte oder ein Abspiellaufwerk (z.B. ein CDROM-, DVD-, Blue-ray-Laufwerk) umfassen. Die Daten können audiovisuelle Inhalte umfassen, z.B. Filme, (Fernseh-)Sendungen, o.ä. Insbesondere können die Daten von mobilen Geräten, z.B. einem Computer, einem mobilen Telefon, einem Personal Digital Assistant (PDA) o.ä. bereitgestellt werden.

Die Daten können lokal in dem Fahrzeug von einem Datenträger wiedergegeben werden oder zumindest teilweise über eine z.B. drahtlose Schnittstelle (z.B. DVB, WLAN, Mobilfunkschnittstelle, etc.) geladen bzw. empfangen werden. Die Quelle stellt vorzugsweise die Daten als paketorientierten Datenstrom über das Netzwerk bereit. Diese Bereitstellung kann z.B. als eine Übertragung an alle Teilnehmer, einen Teil der Teilnehmer oder einen einzelnen Teilnehmer des Netzwerks erfolgen (broadcast, multicast, unicast).

Eine Weiterbildung ist es, dass die Daten von der ersten Verarbeitungseinheit und von der zweiten Verarbeitungseinheit (insbesondere über das Netzwerk von der Quelle) empfangen werden.

Eine andere Weiterbildung ist es, dass die Daten von der zweiten Verarbeitungseinheit dekodiert werden,

- wobei ein Teil der dekodierten Daten, insbesondere die Audio- oder die Videoinformationen verworfen wird;
- wobei die nicht verworfenen dekodierten Daten zu der übermittelten Ausgabezeit insbesondere von der zweiten Verarbeitungseinheit ausgegeben werden.

Beispielsweise werden die Daten umfassend Audio- und Videoinformationen dekodiert und von der zweiten Verarbeitungseinheit dann die Audioinformationen verworfen, weil diese auch von der ersten Verarbeitungseinheit dekodiert werden und von dieser ersten Verarbeitungseinheit ein Hauptschallfeld des Fahrzeugs (umfassend mindestens einen Verstärker und mindestens einen Lautsprecher in dem Fahrzeug) angesteuert wird.

Alternativ ist es möglich, dass die Videoinformation verworfen wird. Auch kann ein Teil der Audioinformation oder ein Teil der Videoinformation verworfen werden. Insbesondere können Teile einer Audioinformation an unterschiedlichen Orten bzw. Verarbeitungseinheiten des Fahrzeugs dekodiert und ausgegeben werden (z.B. unterschiedliche Ton-Kanäle bei Stereo-, Surround- oder sonstigen Mehrkanal-Tonausgaben).

Ferner ist es eine Weiterbildung, dass die Daten eine Präsentationszeit aufweisen, ab der die empfangenen Daten von der ersten Verarbeitungseinheit und von der zweiten Verarbeitungseinheit dekodiert werden.

Auch ist es eine Weiterbildung, dass die Daten Datenpakete umfassen, wobei mindestens ein Datenpaket eine Präsentationszeit enthält.

Insbesondere kann es sich hierbei um Datenpakete nach einem AVB-Protokoll oder basierend auf einem AVB-Protokoll handeln. Beispielsweise können die Daten in IEEE 1722 Paketen übertragen werden.

Ferner ist es eine Weiterbildung, dass die zweite Verarbeitungseinheit eine Audio-Dekodiereinheit und eine Video-Dekodiereinheit aufweist, wobei die Ausgabe der Video-Dekodiereinheit über die Ausgabezeit der ersten Verarbeitungseinheit gesteuert wird.

Insbesondere kann die die Dekodierung der Video-Dekodiereinheit anhand der übermittelten Ausgabezeit entsprechend von der zweiten Verarbeitungseinheit verzögert werden. Somit steuert die erste Verarbeitungseinheit die Video-Dekodiereinheit der zweiten Verarbeitungseinheit anhand der übermittelten Ausgabezeit.

Im Rahmen einer zusätzlichen Weiterbildung weist die erste Verarbeitungseinheit eine Audio-Dekodiereinheit und eine Video-Dekodiereinheit auf, wobei eine Ausgabe der Video-Dekodiereinheit der ersten Verarbeitungseinheit von der Audio-Dekodiereinheit der ersten Verarbeitungseinheit gesteuert, insbesondere verzögert, wird.

Hierbei ist es von Vorteil, dass die Audio-Dekodiereinheit in Software realisiert sein kann und bei einer (vorübergehenden starken) Belastung der Verarbeitungseinheit durch andere Funktionen diese Audio-Dekodiereinheit die Video-Dekodiereinheit so ansteuert, dass die Wiedergabe der Videoinformation immer noch lippensynchron zu der dekodierten und ausgegeben Audioinformation erfolgt.

Eine nächste Weiterbildung besteht darin, dass die Video-Dekodiereinheit der ersten Verarbeitungseinheit anhand der Ausgabezeit gesteuert wird.

Eine Ausgestaltung ist es, dass mindestens ein Teil der von der ersten Verarbeitungseinheit dekodierten Daten über das Netzwerk an eine Ausgabeeinheit übermittelt wird.

Vorzugsweise handelt es sich bei der Ausgabeeinheit um eine Komponente, die mit dem Netzwerk verbunden ist und über dieses Netzwerk Daten erhalten kann. Die Ausgabeeinheit kann eine Audioausgabeeinheit (z.B. mit mindestens einem Verstärker und mindestens einem Lautsprecher) und/oder eine Videoausgabeeinheit aufweisen.

Die von der ersten Verarbeitungseinheit bereitgestellten dekodierten Daten können vorzugsweise ohne weitere Dekodierung oder Umsetzung (Transcoding) ausgegeben werden.

Insbesondere ist es eine Weiterbildung, dass der Teil der an die Ausgabeeinheit übermittelten dekodierten Daten Audiodaten umfasst.

Alternativ ist es auch möglich, dass die dekodierten Daten Videodaten sind oder solche umfassen.

Eine alternative Ausführungsform besteht darin, dass die Ausgabeeinheit mindestens einen Verstärker mit je mindestens einem Lautsprecher umfasst.

Insbesondere kann die Ausgabeeinheit einen Puffer (Speicher) aufweisen zum Zwischenspeichern der eingehenden dekodierten Daten.

Insbesondere kann mittels der Ausgabeeinheit ein Hauptschallfeld eines Fahrzeugs angesteuert werden.

Eine nächste Ausgestaltung ist es, dass die dekodierten Daten zusammen mit der Ausgabezeit an die Ausgabeeinheit übermittelt werden.

Somit ist es möglich, dass die Ausgabeeinheit die dekodierten Daten zu der Ausgabezeit ausgibt. Dadurch kann auch bei Verwendung mehrerer verteilter Komponenten, die über ein Netzwerk miteinander verbunden sind, eine lippensynchrone Ausgabe von Audio- und Videoinformation erreicht werden.

Auch ist es eine Ausgestaltung, dass die dekodierten Daten mit der Ausgabezeit an die Ausgabeeinheit mittels eines AVB-Protokolls, insbesondere mindestens eines IEEE 1722 Pakets, übermittelt werden.

Die Ausgabezeit kann entsprechend als Präsentationszeit in die Pakete des AVB-Protokolls eingesetzt werden.

Eine Weiterbildung besteht darin, dass die an das Netzwerk angeschlossenen Komponenten (zeitlich) synchronisiert werden.

So wird insbesondere vorgeschlagen, dass mehrere Komponenten des Netzwerks auf eine gemeinsame Zeitbasis synchronisiert werden, so dass die Ausgabe der verarbeiteten Daten basierend auf dieser gemeinsamen Zeitbasis erfolgen kann.

Die gemeinsame Zeitbasis der mehreren Komponenten des Netzwerks kann mittels eines geeigneten Protokolls, z.B. eines PTP (Precision Time Protocol, gemäß IEEE 1588 oder IEEE 802.1AS) erreicht werden. Anhand der synchronisierten Komponenten des Netzwerks ist es möglich, dass die Präsentationszeit in verschiedenen Komponenten gleich interpretiert wird und somit die Ausgabe zeitsynchron in verteilten Komponenten erfolgen kann.

Eine andere Weiterbildung besteht darin, dass das Netzwerk ein Bussystem umfasst.

Insbesondere kann das Bussystem als ein MOST-Bussystem ausgeführt sein. Für die Übertragung der Synchronisationsinformation kann ein synchroner und/oder isochroner Kanal des Bussystems genutzt werden.

Ferner ist es eine Weiterbildung, dass anhand der Synchronisationsinformation die zweite Verarbeitungseinheit mit der ersten Verarbeitungseinheit synchronisiert wird.

Insbesondere kann es sich bei der Synchronisationsinformation um einen Zeitstempel der Video-Dekodiereinheit der ersten Verarbeitungseinheit handeln. So können sich die Video-Dekodiereinheiten der ersten Verarbeitungseinheit und der zweiten Verarbeitungseinheit synchronisieren und es kann eine lippensynchrone Ausgabe der Audio- und Videoinformation gewährleistet werden.

Die oben genannte Aufgabe wird auch gelöst mittels einer Vorrichtung umfassend eine Verarbeitungseinheit, die derart eingerichtet ist, dass das hierin beschriebene Verfahren ausführbar ist.

Die Verarbeitungseinheit kann z.B. eine (teilweise) analoge oder (teilweise) digitale Verarbeitungseinheit sein, sie kann als ein Prozessor und/oder eine zumindest teilweise festverdrahtete Schaltungsanordnung ausgeführt sein, die derart eingerichtet ist, dass das Verfahren wie hierin beschrieben durchführbar ist.

Der Prozessor kann jede Art von Prozessor oder Rechner oder Computer mit entsprechend notwendiger Peripherie (Speicher, Input/Output-Schnittstellen, Ein-Ausgabe-Geräte, etc.) sein oder einen solchen umfassen. Weiterhin kann eine festverdrahtete Schaltungseinheit, z.B. ein FPGA oder ein ASIC oder eine sonstige integrierte Schaltung, vorgesehen sein.

Eine nächste Ausgestaltung ist es, dass die Vorrichtung ein Steuergerät oder einen Teil eines Steuergeräts des Fahrzeugs umfasst.

Auch wird die oben genannte Aufgabe gelöst mittels eines Fahrzeugs umfassend mindestens eine der hierin beschriebenen Vorrichtungen.

Ausführungsbeispiele der Erfindung werden nachfolgend anhand der Zeichnungen dargestellt und erläutert.

Es zeigen:

Fig.2    ein Blockdiagramm mehrerer Komponenten eines Fahrzeugs, die über ein Netzwerk miteinander verbunden sind;

Fig.3    schematisch einen Zeitstrahl mit unterschiedlichen Zeitpunkten zur Veranschaulichung einer lippensynchronen Ausgabe einer Audioinformation über ein Hauptschallfeld;

Fig.4    ein Blockdiagramm mehrerer Komponenten eines Fahrzeugs, die über ein Bussystem miteinander verbunden sind;

Fig.5    ein schematisches Blockdiagramm zur Veranschaulichung einer Synchronisation zwischen an das Bussystem gemäß Fig.4 angeschlossenen Dekodiereinheiten.

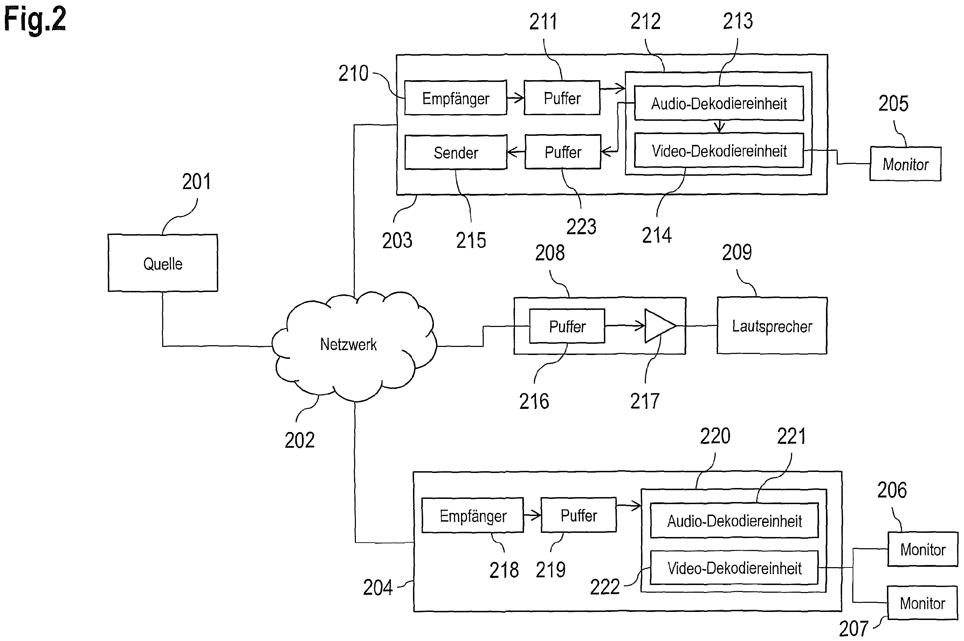

**Fig.2** zeigt ein Blockdiagramm mehrerer Komponenten eines Fahrzeugs, die über ein Netzwerk miteinander verbunden sind.

Eine Quelle 201 stellt audiovisuelle Daten in Form eines komprimierten Datenstroms umfassend Video- und Audioinformation über ein Netzwerk 202, z.B. ein Ethernet, einer Verarbeitungseinheit 203 (z.B. einer Headunit) und einer Verarbeitungseinheit 204 (z.B. einer RSE-Einheit) bereit. An die Verarbeitungseinheit 203 ist ein Monitor 205 und an die Verarbeitungseinheit 204 sind zwei Monitore 206 und 207 angeschlossen.

Weiterhin ist ein Verstärker 208 dargestellt, der mit dem Netzwerk 202 verbunden ist. An den Verstärker 208 ist ein Lautsprecher 209 angeschlossen. Entsprechend können mehrere Verstärker oder mehrere Lautsprecher (u.a.

pro Verstärker) vorgesehen sein.

Die Verarbeitungseinheit 203 umfasst einen Empfänger 210, der über einen Puffer 211 mit einem Demultiplexer/Dekoder 212 verbunden ist. Der Demultiplexer/Dekoder 212 umfasst eine Audio-Dekodiereinheit 213 und eine Video-Dekodiereinheit 214, wobei die Audio-Dekodiereinheit 213 beispielsweise in Software und die Video-Dekodiereinheit 214 beispielsweise in Hardware realisiert ist. Über die Video-Dekodiereinheit 214 wird der Monitor 205 angesteuert, d.h. die dekodierte Videoinformation kann auf dem Monitor ausgegeben werden. Ferner umfasst die Verarbeitungseinheit 203 einen Sender 215, der die in einem Puffer 223 enthaltene dekodierte Audioinformation von der Audio-Dekodiereinheit 213 über das Netzwerk an den Verstärker 208 übermittelt.

Vorzugsweise umfasst der Verstärker 208 einen Puffer 216 zum Zwischenspeichern erhaltener Audioinformationen und einen Treiber 217, der den (mindestens einen) Lautsprecher 209 ansteuert.

Der Aufbau der Verarbeitungseinheit 204 entspricht weitgehend der Verarbeitungseinheit 203, nur dass in dem Beispiel gemäß Fig.2 die Verarbeitungseinheit 204 keinen Sender aufweist und beispielhaft die dekodierte Videoinformation auf den beiden Monitoren 206 und 207 ausgibt. Somit umfasst die Verarbeitungseinheit 204 einen Empfänger 218, der über einen Puffer 219 mit einem Demultiplexer/Dekoder 220 verbunden ist. Der Demultiplexer/Dekoder 220 umfasst eine Audio-Dekodiereinheit 221 und eine Video-Dekodiereinheit 222, wobei die Audio-Dekodiereinheit 221 beispielsweise in Software und die Video-Dekodiereinheit 222 beispielsweise in Hardware realisiert ist.

Die mit dem Netzwerk verbundenen Komponenten Verarbeitungseinheit 203, Verarbeitungseinheit 204, Verstärker 208 und Quelle 201 sind mittels eines Protokolls (z.B. IEEE802.1AS bzw. PTPv2) zeitlich synchronisiert, haben also eine gemeinsame synchrone Zeitbasis.

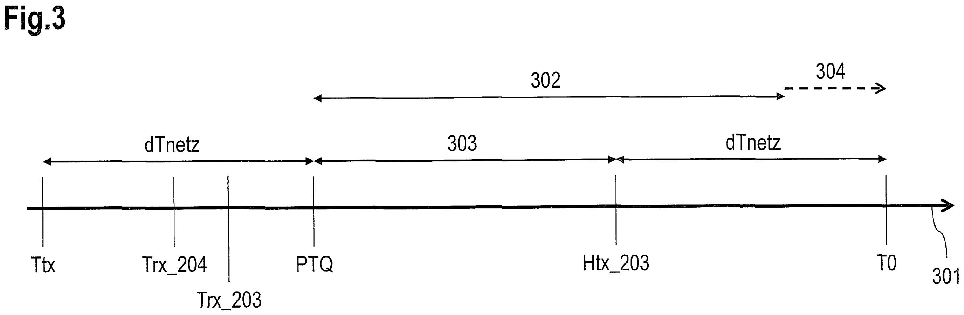

**Fig.3** zeigt schematisch einen Zeitstrahl 301 mit unterschiedlichen Zeitpunkten und illustriert, wie eine lippensynchrone Ausgabe der Audioinformation über ein Hauptschallfeld erreicht werden kann.

Zu einer Zeit T0 sollen Videoinformation und Audioinformation lippensynchron ausgegeben werden. Zu einer Zeit Ttx verschickt die Quelle 201 den Datenstrom umfassend die komprimierte Videoinformation mit komprimierter Audioinformation. Der Datenstrom kommt zu einem Zeitpunkt Trx_203 bei der Verarbeitungseinheit 203 und zu einem Zeitpunkt Trx_204 der Verarbeitungseinheit 204 an. Insbesondere durch die Laufzeiten in dem Netzwerk 202 sind die Zeitpunkte Trx_203 und Trx_204 verschieden.

Die Audio-Dekodiereinheit 213 der Verarbeitungseinheit 203 verarbeitet die Daten schneller als die Video-Dekodiereinheit 214, d.h. die Audioinformationen stehen früher bereit als die zugehörigen Videoinformationen. Optional kann ein Puffer 223 (Zwischenspeicher) der dekodierten Audio- und/oder Videoinformation in der Verarbeitungseinheit 203 vorgesehen sein. Optional kann die Audio-Dekodiereinheit 213 die Verarbeitung der Daten (Dekodierung der Videoinformation) bei der Video-Dekodiereinheit 214 verzögern ("abbremsen"), wenn sich die Dekodierung der Audioinhalte verzögert, weil beispielsweise von der Verarbeitungseinheit 203 vorübergehend andere Aufgaben (höher priorisierte Software-Prozesse) ausgeführt werden müssen. Diese Verzögerung (Steuerung der Video-Dekodiereinheit 214) ist angedeutet in Fig.2 durch einen Pfeil von der Audio-Dekodiereinheit 213 zu der Video-Dekodiereinheit 214.

Die Verarbeitungseinheit 204 dekodiert die Audioinformation und die Videoinformation mittels der Einheit Demultiplexer/Dekoder 220. Die dekodierte Audioinformation wird verworfen, die dekodierte Videoinformation wird auf den Monitoren 206, 207 ausgegeben. Vorzugsweise wird die dekodierte Videoinformation nahezu ohne Verzögerung ausgegeben, um keinen (zusätzlichen bzw. großen) Puffer zum Zwischenspeichern der dekodierten Videoinformationen in der Verarbeitungseinheit 204 zu benötigen.

Um eine lippensynchrone Ausgabe der Audioinformation zu der auf den Monitoren 205, 206, 207 gezeigten Videoinformation zu erreichen, wird die gemeinsame Zeitbasis der an dem Netzwerk angeschlossenen Komponenten in Verbindung mit der Präsentationszeit des IEEE 1722 Transportprotokolls wie folgt genutzt: Die Quelle 201 schreibt in ein 1722-Paket eine Präsentationszeit PTQ, die so weit in der Zukunft liegt, dass der Datenstrom von der Quelle 201 sowohl die Verarbeitungseinheit 203 als auch die Verarbeitungseinheit 204 erreichen kann:

$$PTQ = Ttx + dTnetz,$$

wobei dTnetz diese maximal angenommene Übertragungsverzögerung (Zeitverzögerung bedingt durch den Transfer über das Netzwerk 202) bezeichnet. Die Verarbeitungseinheiten 203 und 204 speichern die Pakete in deren Puffer 211, 219 und leiten die gespeicherten Pakete erst zu dem Zeitpunkt PTQ an den Demultiplexer/Dekoder 212, 220 weiter.

Somit ist sichergestellt, dass die Demultiplexer/Dekoder 212, 220 zur gleichen Zeit mit der Verarbeitung bzw. Dekodierung des gleichen Datenpakets beginnen.

Um die lippensynchrone Ausgabe der Audioinformation zu erreichen, ist vorgesehen, dass die Audio-Dekodiereinheit 213 der Verarbeitungseinheit 203 die Video-Dekodiereinheit 222 der Verarbeitungseinheit 204 beeinflussen bzw. steuern, insbesondere verzögern ("abbremsen") kann. Hierzu verschickt die Audio-Dekodiereinheit 213 eine Nachricht (z.B. ein Telegramm) an die Verarbeitungseinheit 204 umfassend die Ausgabezeit T0, z.B. umfassend einen PTP Zeitstempel mit dieser Ausgabezeit TO. Zu der Ausgabezeit TO soll die Audioinformation wiedergegeben werden, entsprechend kann die Verarbeitungseinheit 204 die Ausgabe der Videoinformation auf den Monitoren 206, 207 anpassen. Somit kann die Audio-Dekodiereinheit 213 die Video-Dekodiereinheit 214 und über das genannte Telegramm, das über den Sender 215 der Verarbeitungseinheit 204, bzw. der Video-Dekodiereinheit 222, übermittelt wird, auch die Video-Dekodiereinheit 222 steuern (z.B. abbremsen). Somit ist gewährleistet, dass die Ausgabe der Videoinformation auf den Monitoren 205, 206 und 207 im Wesentlichen zeitgleich und synchron zu der Audioinformation erfolgt.

So überträgt die Verarbeitungseinheit 203 zu einer Zeit Htx_203 die dekomprimierte Audioinformation an den Verstärker 208 mittels eines IEEE 1722 Pakets umfassend die vorstehend genannte Präsentationszeit TO, wobei gilt:

$$T0 = Htx\_203 + dTnetz.$$

Dementsprechend ergibt sich für das Netzwerk 202 die Anforderung, dass die Übertragungsverzögerung dTnetz so kurz ist, dass sie durch das Verlangsamen der Video-Dekodiereinheit 222 gegenüber der (von der Audio-Dekodiereinheit 213) für die Dekodierung der Audioinformation benötigten Zeitdauer 303 erreicht werden kann. Mit anderen Worten soll eine Verarbeitungszeit 302 der Video-Dekodiereinheit 222 so modifiziert werden, dass die Summe aus der Zeitdauer 303 und der Übertragungsverzögerung dTnetz erreicht werden kann. Da die Verzögerung 304 der Verarbeitungszeit 302 der Video-Dekodiereinheit ohne zusätzliche Zwischenspeicherung der dekodierten Videoinformation nur in geringem Maße möglich ist, sollte dann das Netzwerk eine entsprechend schnelle Übertragung und somit eine entsprechend kurze Übertragungsverzögerung dTnetz bereitstellen.

Insbesondere kann die Video-Dekodiereinheit über einen Puffer verfügen, so dass eine Haltefunktion und eine Überspringfunktion von in dem Puffer zwischengespeicherten Daten erfolgen kann, um die Ausgabe entsprechend zu beeinflussen.

Allerdings entfällt diese Anforderung, wenn am Ausgang der Video-Dekodiereinheit 222 ein Puffer und entsprechend ein Puffer am Ausgang der Video-Dekodiereinheit 214 (nicht in Fig.2 dargestellt) vorgesehen ist.

Hierbei ist es von Vorteil, dass als Netzwerk 202 in dem Fahrzeug ein Ethernet eingesetzt werden kann und trotzdem eine lippensynchrone Ausgabe von Audioinformation und Videoinformationen, die an verschiedenen Stellen in dem Fahrzeug dekodiert werden, möglich ist. Ein weiterer Vorteil ist es, dass keine zusätzlichen, teuren Puffer bzw. Speicher in den Verarbeitungseinheiten bzw. Dekodiereinheiten benötigt werden.

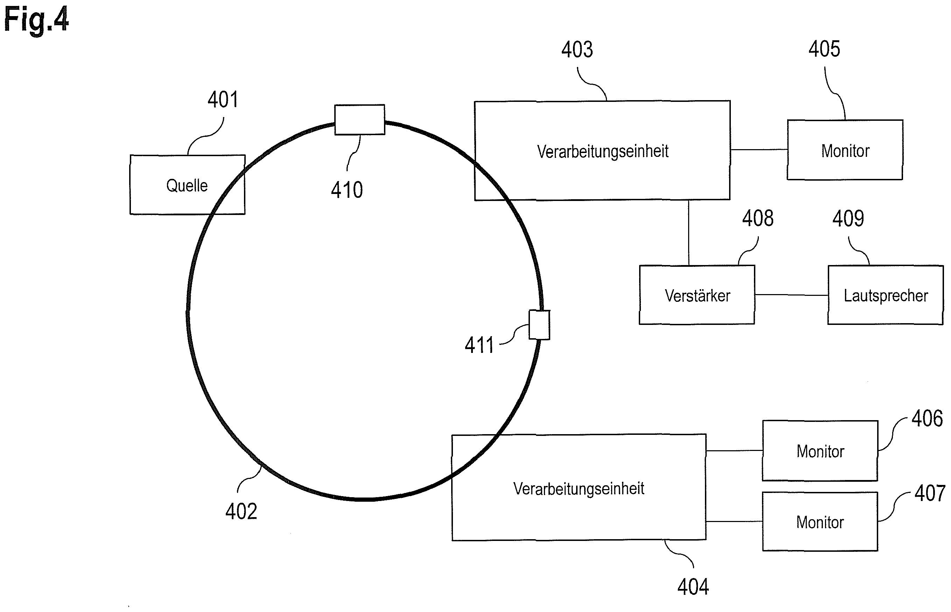

Fig.4 zeigt ein alternatives Ausführungsbeispiel mit einem Blockdiagramm mehrerer Komponenten eines Fahrzeugs, die über ein Bussystem miteinander verbunden sind.

Eine Datenquelle 401 ist über ein Bussystem 402, z.B. einen MOST-Bus, mit einer ersten Verarbeitungseinheit 403 (z.B. einer Headunit) und mit einer zweiten Verarbeitungseinheit 404 (z.B. einer RSE Einheit) verbunden. An die erste Verarbeitungseinheit 403 sind ein Monitor 405 sowie ein Verstärker 408 angeschlossen, der mindestens einen Lautsprecher 409 speist. Weiterhin sind an zweite Verarbeitungseinheit404 zwei Monitore 406, 407 angeschlossen.

Ein komprimierter audiovisueller Datenstrom 410 (z.B. DMB-Video) wird von der Datenquelle 401 über einen synchronen und/oder isochronen Kanal des Bussystems 402 an die beiden Verarbeitungseinheiten 403, 404 (Video-Senken) gesendet.

Vorzugsweise weist der audiovisuelle Datenstrom 410 eine Zeitstempelinformationen auf, anhand derer ein Abspielzeitpunkt in den Verarbeitungseinheiten 403, 404 ermittelt werden kann (beispielsweise übermittelt die Datenquelle 401 MPEG-TS Datenpakete).

Der audiovisuelle Datenstrom 410 wird in der Verarbeitungseinheit 404 dekodiert, die dekodierte Audioinformation verworfen und die dekodierte Videoinformation wird an den angeschlossenen Monitoren 406, 407 ausgegeben.

Entsprechend wird der audiovisuelle Datenstrom 410 in der Verarbeitungseinheit 403 dekodiert, die dekodierte Audioinformation wird (z.B. ungepuffert) über das Bussystem 402 auf einem synchronen und/oder isochronen Kanal an den Verstärker übermittelt. Alternativ ist es möglich, dass der Verstärker 408 unmittelbar von der Verarbeitungseinheit 403 angesteuert wird. Die von der Verarbeitungseinheit 403 dekodierten Videoinhalte werden (zeitnah, insbesondere unmittelbar) ausgegeben, wobei vorzugsweise nur ein kleiner Puffer bzw. Speicher für die Dekodierung und Ausgabe der Videodaten (z.B. in einer als Hardware realisierten Video-Dekodiereinheit) vorgesehen ist.

Um zu verhindern, dass die Verarbeitungseinheiten 403 und 404 aufgrund von Laufzeitunterschieden auseinanderdriften und damit eine lippensynchrone Ausgabe der Audio- und Videoinformation nicht mehr gewährleistet ist, wird folgender Synchronisationsmechanismus vorgeschlagen: Die Verarbeitungseinheit 403, die das Hauptschallfeld des Fahrzeugs mittels der dekodierten Audioinformation ansteuert, sendet eine Synchronisationsinformation 411, insbesondere einen Zeitstempel (z.B. einen Dekoder-Zeitstempel in Systemticks) an die Verarbeitungseinheit 404.

Vorzugsweise wird die Synchronisationsinformation über einen synchronen und/oder isochronen Kanal des Bussystems übermittelt.

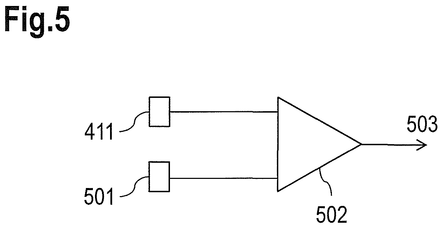

Fig.5 zeigt schematisch ein Blockdiagramm zur Auswertung und Einstellung der Synchronisationsinformation 411 in der Verarbeitungseinheit 404. So wird anhand eines Komparators 502 die Synchronisationsinformation 411 mit einem Zeitstempel 501 der Verarbeitungseinheit 404 verglichen und anhand der bestimmten Abweichung 503 wird die Verarbeitungseinheit 404 (auf)synchronisiert, d.h. entsprechend eingestellt. Somit wird erreicht, dass die Verarbeitungseinheiten 403, 404 zueinander synchron sind. Die Synchronisierung der Verarbeitungseinheit 404 kann z.B. dadurch erreicht werden, dass einzelne Frames übersprungen oder doppelt ausgegeben werden.

**Bezugszeichenliste:**

| | | | |
|---|---|---|---|
| 101 | Quelle | 301 | Zeitstrahl |
| 102 | Netzwerk | 302 | Verarbeitungszeit der Video-Dekodiereinheit 222 |
| 103 | Verarbeitungseinheit | | |
| 104 | Verarbeitungseinheit | 303 | Verarbeitungszeit der Audio-Dekodiereinheit 213 |
| 105 | Monitor | | |
| 106 | Monitor | 304 | Verzögerung |
| 107 | Monitor | T0 | Ausgabezeit |
| 108 | Verstärker | PTQ | Präsentationszeit (von der Quelle 201 vorgegeben) |
| 109 | Lautsprecher | | |
| | | Ttx | Zeit, zu der die Quelle die Daten (Pakete) verschickt |
| 201 | Quelle | | |
| 202 | Netzwerk | dTnetz | Übertragungsverzögerung in dem Netzwerk 202 |
| 203 | Verarbeitungseinheit | | |
| 204 | Verarbeitungseinheit | Trx_203 | Zeitpunkt, zu dem die Daten von der Verarbeitungseinheit 203 empfangen werden |
| 205 | Monitor | | |
| 206 | Monitor | | |
| 207 | Monitor | Trx_204 | Zeitpunkt, zu dem die Daten von der Verarbeitungseinheit 204 empfangen werden |
| 208 | Verstärker | | |
| 209 | Lautsprecher | | |
| 210 | Empfänger | Htx_203 | Zeitpunkt, zu dem die Verarbeitungseinheit 203 die dekomprimierte Audioinformation an den Verstärker 208 mittels eines IEEE 1722 Pakets übermittelt |
| 211 | Puffer (Speicher) | | |
| 212 | Demultiplexer/Dekoder | | |
| 213 | Audio-Dekodiereinheit | | |
| 214 | Video-Dekodiereinheit | | |
| 215 | Sender | | |
| 216 | Puffer (Speicher) | | |
| 217 | Treiber | 401 | Quelle |
| 218 | Empfänger | 402 | Netzwerk (Bussystem) |
| 219 | Puffer (Speicher) | 403 | Verarbeitungseinheit |
| 220 | Demultiplexer/Dekoder | 404 | Verarbeitungseinheit |
| 221 | Audio-Dekodiereinheit | 405 | Monitor |
| 222 | Video-Dekodiereinheit | 406 | Monitor |
| 223 | Puffer (Speicher) | 407 | Monitor |

**Patentansprüche**

1. Verfahren zur Verarbeitung von Daten in einem Fahrzeug,

   - bei dem die Daten über ein Netzwerk (102) von einer ersten Verarbeitungseinheit (203) empfangen werden,
   - bei dem die Daten von der ersten Verarbeitungseinheit (203) dekodiert werden und
   - bei dem eine Wiedergabeinformation umfassend eine Ausgabezeit (T0) an eine zweite Verarbeitungseinheit (204) übertragen wird,

   wobei

   - die erste Verarbeitungseinheit (203) und die zweite Verarbeitungseinheit (204) beide jeweils eine Audio-Dekodiereinheit (213, 221) und eine Video-Dekodiereinheit (214, 222) aufweisen,
- die erste Verarbeitungseinheit (203) die Ausgabezeit (T0) an die zweite Verarbeitungseinheit (204) überträgt,
- die Video-Dekodiereinheit (213) der ersten Verarbeitungseinheit (203) anhand der Ausgabezeit (T0) gesteuert wird und dass
- die Ausgabe der Video-Dekodiereinheit (222) der zweiten Verarbeitungseinheit (204) anhand der übertragenen Ausgabezeit (T0) durch die erste Verarbeitungseinheit (203) gesteuert wird.

2. Verfahren nach Anspruch 1, bei dem die Daten von der ersten Verarbeitungseinheit (203) und von der zweiten Verarbeitungseinheit (204) empfangen werden.

3. Verfahren nach Anspruch 2, bei dem die Daten von der zweiten Verarbeitungseinheit (204) dekodiert werden,

- wobei ein Teil der dekodierten Daten, insbesondere die Audio- oder die Videoinformationen verworfen wird und
- wobei die nicht verworfenen dekodierten Daten zu der übermittelten Ausgabezeit (T0) ausgegeben werden.

4. Verfahren nach einem der Ansprüche 2 oder 3, bei dem die Daten eine Präsentationszeit (PTQ) aufweisen, ab der die empfangenen Daten von der ersten Verarbeitungseinheit (203) und von der zweiten Verarbeitungseinheit (204) dekodiert werden.

5. Verfahren nach Anspruch 4, bei dem die Daten Datenpakete umfassen, wobei mindestens ein Datenpaket die Präsentationszeit (PTQ) enthält.

6. Verfahren nach einem der vorhergehenden Ansprüche, bei dem die erste Verarbeitungseinheit (203) eine Audio-Dekodiereinheit (213) und eine Video-Dekodiereinheit (214) aufweist, wobei eine Ausgabe der Video-Dekodiereinheit (214) der ersten Verarbeitungseinheit (203) von der Audio-Dekodiereinheit (213) der ersten Verarbeitungseinheit (203) gesteuert, insbesondere verzögert, wird.

7. Verfahren nach einem der vorhergehenden Ansprüche, bei dem mindestens ein Teil der von der ersten Verarbeitungseinheit (203) dekodierten Daten über das Netzwerk (202) an eine Ausgabeeinheit (208, 209) übermittelt wird.

8. Verfahren nach Anspruch 7, bei dem der Teil der an die Ausgabeeinheit (208, 209) übermittelten dekodierten Daten Audiodaten umfasst.

9. Verfahren nach einem der Ansprüche 7 oder 8, bei dem die Ausgabeeinheit (208, 209) mindestens einen Verstärker (208) mit je mindestens einem Lautsprecher (209) umfasst.

10. Verfahren nach einem der Ansprüche 7 bis 9, bei dem die dekodierten Daten mit der Ausgabezeit (T0) an die Ausgabeeinheit (208, 209) übermittelt werden.

11. Verfahren nach Anspruch 10, bei dem die dekodierten Daten mit der Ausgabezeit (T0) an die Ausgabeeinheit (208, 209) mittels eines AVB-Protokolls, insbesondere mindestens eines IEEE 1722 Pakets, übermittelt werden.

12. Verfahren nach einem der vorhergehenden Ansprüche, bei dem die an das Netzwerk (202) angeschlossenen Komponenten synchronisiert werden.

13. Verfahren nach einem der vorhergehenden Ansprüche, bei dem das Netzwerk (202) ein Bussystem umfasst.

14. Verfahren nach einem der vorhergehenden Ansprüche, bei dem anhand der Synchronisationsinformation die zweite Verarbeitungseinheit (204) mit der ersten Verarbeitungseinheit (203) synchronisiert wird.

15. Vorrichtung mit einer Verarbeitungseinheit, die derart eingerichtet ist, dass ein Verfahren nach einem der vorhergehenden Ansprüche ausführbar ist.

**Claims**

1. A method for processing data in a vehicle,

- in which the data is received by a first processing unit (203) via a network (102),
- in which the data is decoded by the first processing unit (203), and
- in which a piece of reproduction information comprising an output time (T0) is transmitted to a second processing unit (204),

wherein

- the first processing unit (203) and the second processing unit (204) both have an audio decoding unit(213, 221) and a video decoding unit (214, 222),
- the first processing unit (203) transmits the output time (T0) to the second processing unit (204),
- the video decoding unit (213) of the first processing unit (203) is controlled on the basis of the output time (T0), and wherein
- the output of the video decoding unit (222) of the second processing unit (204) is controlled by the first processing unit (203) on the basis of the transmitted output time (T0).

2. A method according to claim 1, in which the data is received by the first processing unit (203) and by the second processing unit (204).

3. A method according to claim 2, in which the data is decoded by the second processing unit (204),

- wherein some of the decoded data, more especially the audio information or the video information, is discarded, and
- wherein the decoded data that has not been discarded is output at the transmitted output time (T0).

4. A method according to either one of claims 2 or 3, in which the data has a presentation time (PTQ), from which the received data is decoded by the first processing unit (203) and by the second processing unit (204).

5. A method according to claim 4, in which the data comprises data packets, wherein at least one data packet contains the presentation time (PTQ).

6. A method according to any one of the preceding claims, in which the first processing unit (203) comprises an audio decoding unit (213) and a video decoding unit (214), wherein an output of the video decoding unit (214) of the first processing unit (203) is controlled, more especially delayed, by the audio decoding unit (213) of the first processing unit (203).

7. A method according to any one of the preceding claims, in which at least some of the data decoded by the first processing unit (203) is transmitted to an output unit (208, 209) via the network (202).

8. A method according to claim 7, in which some of the decoded data transmitted to the output unit (208, 209) comprises audio data.

9. A method according to either one of claims 7 or 8, in which the output unit (208, 209) comprises at least one amplifier (208) having, in each case, at least one loudspeaker (209).

10. A method according to any one of claims 7 to 9, in which the decoded data is transmitted with the output time (T0) to the output unit (208, 209).

11. A method according to claim 10, in which the decoded data is transmitted with the output time (T0) to the output unit(208, 209) by means of an AVB protocol, more especially at least one IE E E 1722 packet.

12. A method according to any one of the preceding claims, in which the components connected to the network (202) are synchronised.

13. A method according to any one of the preceding claims, in which the network (202) comprises a bus system.

14. A method according to any one of the preceding claims, in which the second processing unit (204) is synchronised with the first processing unit (203) on the basis of the synchronisation information.

15. A device comprising a processing unit that is designed in such a way that a method according to any one of the preceding claims can be carried out.

**Revendications**

1. Procédé de traitement de données dans un véhicule selon lequel :

   - les données sont reçues par une première unité de traitement (203) par l'intermédiaire d'un réseau (102),
   - les données sont décodées par la première unité de traitement (203), et
   - une information de reproduction comprenant un temps d'émission (T0) et transmise à une seconde unité de traitement (204),
   - la première unité de traitement (203) et la seconde unité de traitement (204) comportent toutes deux une unité de décodage audio (213, 221) et une unité de décodage vidéo (214, 222),

   la première unité de traitement (203) transmet le temps d'émission (T0) à la seconde unité de traitement (204), l'unité de décodage vidéo (213) de la première unité de traitement (203) est commandée sur le fondement du temps d'émission (T0), et l'émission de l'unité de décodage vidéo (222) de la seconde unité de traitement (204) est commandée sur le fondement du temps d'émission (T0) transmis par la première unité de traitement (203).

2. Procédé conforme à la revendication 1, selon lequel les données sont reçues par la première unité de traitement (203) et par la seconde unité de traitement (204).

3. Procédé conforme à la revendication 2, selon lequel les données sont décodées par la seconde unité de traitement (204),
   une partie des données décodées, en particulier les informations audio ou les informations vidéo étant rejetées, et les données décodées non rejetées étant émises au temps d'émission (T0) transmis.

4. Procédé conforme à l'une des revendications 2 et 3, selon lequel les données comportent un temps de présentation (PTQ) à partir duquel les données reçues sont décodées par la première unité de traitement (203) et par la seconde unité de traitement (204).

5. Procédé conforme à la revendication 4, selon lequel les données renferment des paquets de données, au moins un paquet de données renfermant le temps de présentation (PTQ).

6. Procédé conforme à l'une des revendications précédentes, selon lequel la première unité de traitement (203) comporte une unité de décodage audio (213) et une unité de décodage vidéo (214), une émission de l'unité de décodage vidéo (214) de la première unité de traitement (203) étant commandée en particulier retardée par l'unité de décodage audio (213) de la première unité de traitement (203).

7. Procédé conforme à l'une des revendications précédentes, selon lequel au moins une partie des données décodées par la première unité de traitement (203) est transmise par l'intermédiaire du réseau (202) à une unité d'émission (208, 209).

8. Procédé conforme à la revendication 7, selon lequel la partie des données décodées transmise à l'unité d'émission (208, 209) renferme des données audio.

9. Procédé conforme à l'une des revendications 7 et 8, selon lequel l'unité d'émission (208, 209) comporte au moins un amplificateur (208) équipé d'au moins un hautparleur (209).

10. Procédé conforme à l'une des revendications 7 à 9, selon lequel les données décodées sont transmises avec le temps d'émission (T0) à l'unité d'émission (208, 209).

11. Procédé conforme à la revendication 10, selon lequel les données décodées sont transmises avec le temps d'émission (T0) à l'unité d'émission (208, 209) au moyen d'un protocole AVB, en particulier d'au moins un paquet IEEE 1722.

12. Procédé conforme à l'une des revendications précédentes, selon lequel les composants connectés au réseau (202) sont synchronisés.

**13.** Procédé conforme à l'une des revendications précédentes, selon lequel le réseau (202) comporte un système de bus.

**14.** Procédé conforme à l'une des revendications précédentes, selon lequel la seconde unité de traitement (204) est synchronisée avec la première unité de traitement (203) sur le fondement de l'information de synchronisation.

**15.** Dispositif comprenant une unité de traitement qui est réalisé pour permettre la mise en oeuvre du procédé conforme à l'une des revendications précédentes.

# Fig.1

**Fig.2**

Empfänger — Puffer — Audio-Dekodiereinheit
Sender — Puffer — Video-Dekodiereinheit

Monitor

Quelle

Netzwerk

Puffer — ▷ — Lautsprecher

Empfänger — Puffer — Audio-Dekodiereinheit
Video-Dekodiereinheit

Monitor

Monitor

210
211
212
213
205
203
215
223
214
201
208
209
216
217
202
220
221
206
204
218
219
222
207

EP 2 572 463 B1

14

**Fig.3**

# Fig.4

EP 2 572 463 B1

Fig.5